# EUROPEAN PATENT SPECIFICATION

(11) **EP 0 771 898 B1**
(45) Date of publication and mention of the grant of the patent: **19.09.2001**
(21) Application number: 96201681.2
(22) Date of filing: 15.06.1996
(51) Int. Cl.: D06F 39/00, A47L 15/42

(54) **A washing machine with a reservoir for recovering rinsing water**
Waschmaschine mit einem Behälter zum Zurückgewinnen des Spülwassers
Machine à laver dotée d'un réservoir pour récupérer l'eau de rinçage

(30) Priority: 31.10.1995 IT MI950755 U
(43) Date of publication of application: 07.05.1997
(73) Proprietor: CANDY S.p.A., I-20052 Monza (Milano) (IT)
(72) Inventor: Fumagalli, Silvano, 20052, Monza (Milano) (IT)
(74) Representative: Perani, Aurelio

(56) References cited:
- EP-A- 0 607 628
- EP-A- 0 691 099
- GB-A- 2 287 961
- US-A- 5 307 650
- PATENT ABSTRACTS OF JAPAN vol. 018, no. 248 (C-1198), 12 May 1994 -& JP 06 031096 A (SANYO ELECTRIC CO LTD), 8 February 1994,

## Description

The present invention relates to a washing machine with an improved reservoir for recovering rinsing water.

Washing machines with reservoirs for recovering the washing water, preferably at a rinsing stage, for subsequent use as pre-washing or washing water in a subsequent washing cycle are known.

A machine of this type is described in the Applicant's published European patent application No. EP-A-607628.

These machines are quite complex and generally require the use of at least one, if not two, filling/discharging solenoid valves, particularly in the case of washing machines in which the flow is recirculated and, of course, devices for the delivery to the recovery tank.

The use of solenoid valves and the associated control circuits involves structural complications and considerable increases in cost.

Patent Abstracts of Japan vol. 018, no. 248 (C-1198), 12 May 1994 discloses a washing machine in which, by driving a drain pump, washing water utilized in a washing tank is stored by dischargin it through a drain pipe to a high place water storage tank outside the washing machine. Such an arrangement is clearly disadvantageous.

It is therefore desirable to provide a simple and reliable washing machine which can recover the washing liquid and subsequently reuse it with minimal structural modifications in comparison with machines without recovery and thus with minimal production costs both in terms of fixed production investment and in terms of material and components.

The present invention satisfies this requirements as set forth in claim 1 and provides a washing machine having a reservoir for the complete recovery of the last rinsing water, the discharge of the water recovered into the tank of the washing machine for use as first rinsing water in a subsequent washing cycle being brought about by the priming of an inverted siphon by means of a limited supply of mains water.

This simple measure achieves a considerable saving in consumption of washing liquid solely by the addition of a delivery pump to the reservoir (or alternatively a flow diverter valve) and without other structural or programming modifications.

According to another aspect of the invention, the liquid recovery system can advantageously be turned off by means of a push-button without any modification of the programming devices.

The characteristics and advantages of the invention will become clearer From the following description and from the appended drawings, in which:
Figure 1 is a general section taken from the front to the rear of a preferred embodiment of a washing machine with a recovery reservoir according to the present invention,
Figure 2 shows, as an electrical diagram, a device for turning off the recovery system for the washing machine of Figure 1,
Figure 3 is a section taken from the front to the rear of a preferred embodiment of the recovery reservoir for the washing machine of Figure 1,
Figure 4 is a section through the reservoir of Figure 3, taken on the line I-I of Figure 3.

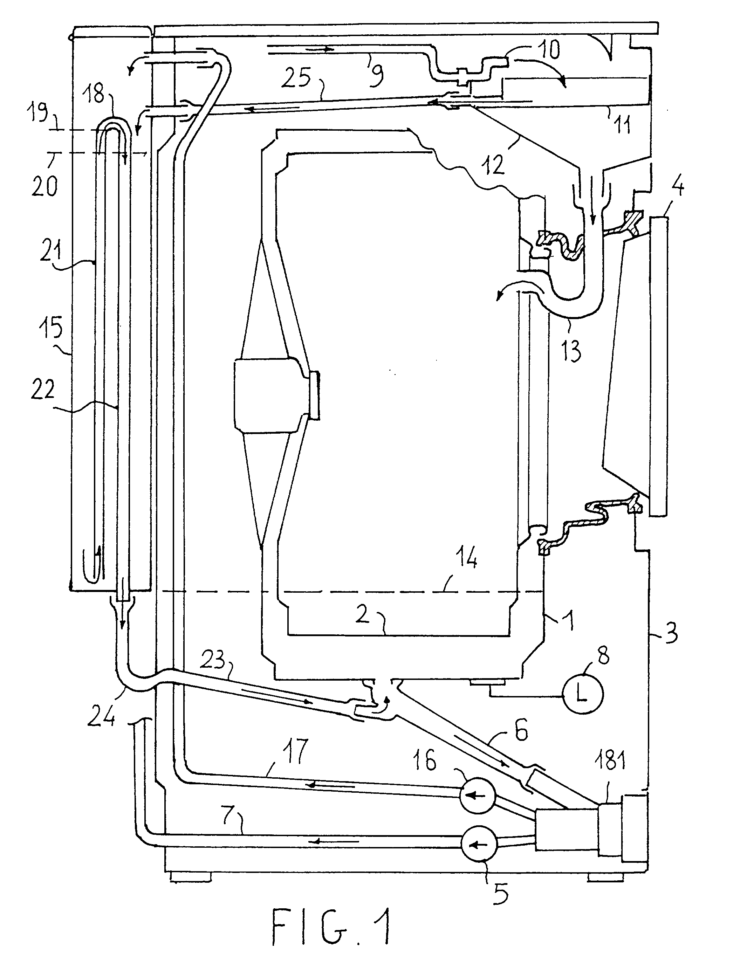

With reference to Figure 1, a washing machine with a reservoir for the recovery of rinsing water according to the present invention comprises a cabinet housing a washing tank 1, a washing drum 2 rotatable inside the tank and mechanical drive members and control members.

Access to the washing drum is through a loading hole opening in the front of the machine 3 as shown, or even in the top wall of the cabinet, the hole being closed by a loading door 4, for example, similar to a port-hole.

The bottom of the washing tank communicates with a discharge pump 5 by means of a discharge collector 6.

When the pump 5 is activated, the liquid in the washing tank 1 is directed into a discharge pipe 7.

A pressure switch 8 connected to the bottom of the washing tank 1 detects and controls the level of liquid in the tank and hence the volume of liquid admitted.

The washing water is drawn from the water mains by means of a solenoid valve, not shown, and is directed by a filler pipe 9 to an orientable nozzle 10 which pours it into one or a plurality of compartments of a detergent-holder cassette 11 housed in a basin unit 12 into which the washing water pours from the cassette, possibly with the addition of detergent, softener, or bleach, according to the various washing stages.

The liquid collected by the basin unit 12 is transferred by gravity through a siphon 13 into the washing tank 1, preferably after passing through the drum 2 which is suitably perforated.

The filling/discharge of washing water and the collection of the detergent are controlled, in known manner, by an electro-mechanical or electronic programmer which defines the durations of the various stages of the washing cycle and, within the various stages, controls the activation of the various mechanical members such as the opening of the liquid-filling solenoid valve, the orientation of the nozzle, the activation of the motor which rotates the drum 2, possibly intermittently or in alternate senses, and the activation of the discharge pump 5.

The filling valve is closed by the pressure switch 8 when a predetermined liquid level 14 has been reached in the washing tank.

Some washing machines also have provision for the use of several pressure switches to define various filling conditions but it is generally preferred to use a single pressure switch the hysteresis of which defines a pressure-switch differential which can conveniently be used for regulating the level (although in a limited manner) in dependence on the linen volume to be washed and linen characteristics.

All of these aspects are known and conventional.

According to the present invention, the washing machine has a reservoir 15 for recovering rinsing water, preferably from the last rinse, for subsequent use as the first rinsing water in a subsequent washing cycle.

The reservoir 15 is advantageously arranged on the rear wall of the cabinet and extends vertically from the level 14 to which the tank 1 is filled up to the top of the cabinet of the washing machine.

The machine also has a second pump 16 with an intake connected to the discharge collector 6 and an output connected to a pipe 17 for delivering rinsing water from the tank 1 to the reservoir 15.

The delivery pipe 17 is connected to the top of the reservoir 15 by a simple connector without intermediate cut-off members.

The pump 5 and the pump 16 together with a filter 181 may preferably, but not necessarily, constitute an integrated unit of the type described in the Applicant's Italian patent application No. MI95U000236.

Alternatively, the pump 16 may be replaced by a three-way diverter valve disposed downstream of the pump 5 for diverting the flow of liquid output by the pump alternatively into the discharge pipe 7 or into the delivery pipe 17.

The reservoir 15 has an inverted siphon 18 preferably, but not necessarily, disposed inside the reservoir 15 with an apex 19 disposed above a predetermined filling level 20 of the reservoir, an intake arm 21 extending to the bottom of the reservoir and opening inside it, and a delivery arm 22 extending beyond the bottom of the reservoir and opening outside it.

The delivery arm 22 is connected to the discharge collector 6 of the tank by means of a pipe 23 with an elbow, preferably comprising a direct siphon 24 which favours the priming of the siphon 18.

A pipe 25 for the supply of supplementary liquid connects a compartment of the detergent-holder cassette 11 to the reservoir 15.

The reservoir 15 advantageously has dimensions such that the entire volume of liquid used in a rinsing operation wich can be recovered by the pump 16 (thus excluding the liquid absorbed by the linen and the liquid flowing back which is in the delivery pipe 17) corresponds to a volume to a filling volume of the reservoir 15 defined by the level 20 which is advantageously below the apex 19 of the siphon and the level of the detergent-holder cassette 11.

The operation of the washing machine described is very simple.

The pre-washing and washing operations take place in conventional manner; the opening of the filler valve supplies the nozzle 10 which is suitably oriented by the programming device for collecting detergent from the cassette 11. The cassette 11 discharges the washing liquid into the basin unit 12 and the tank 1 is filled by the siphon 13 up to the level 14 defined by the operation of the pressure switch 8.

The washing or pre-washing liquid is heated in known manner and the drum 2 is rotated intermittently.

At the end of the washing stage, the pump 5 is activated and the washing liquid is discharged.

The first of a plurality of rinsing stages or operations then starts; in the course of these operations, water supplied from the exterior through the pipe 9 and the suitably oriented nozzle 10 is directed by the pipe 25 into the reservoir 15.

The reservoir 15 which, initially, is empty is filled gradually up to the level of the apex 19 of the siphon 18. In this condition, the siphon 18 is primed and all of the liquid in the reservoir 15 is transferred rapidly, if not instantaneously, into the washing tank 1 where it causes the pressure switch 8 to operate and the filler valve consequently to be closed.

The first rinsing operation is then carried out with a volume of liquid somewhat (by way of indication, 10-15%) greater than that required to fill the washing tank 1 up to the nominal washing level 14, this situation increasing the rinsing efficiency in comparison with that of conventional washing machines in which the rinsing volume has to be equal to the volume of washing liquid, unless several pressure switches or timings, the effect of which is difficult to control, are used.

The first rinsing liquid is then discharged in conventional manner by the activation of the pump 5.

If, however, the reservoir 15 has previously been filled with rinsing water up to the level 20 which corresponds to a nominal fill of, for example, 15 litres the starting of the first rinsing operation brings about a partial supply of liquid to the reservoir 15 raising the level in the reservoir to the apex 19 of the siphon which is primed.

By way of example, this supply may be of the order of 1 litre.

When the siphon 18 is primed, all of the liquid in the reservoir 15 is rapidly transferred to the tank 1 with a flow-rate defined by the hydrostatic head of the siphon and by the loss of head therein and thus at a flow-rate which, after an initial transient condition in which it increases abruptly, decreases gradually as the hydrostatic head of the siphon decreases, owing to the combined effects of the drop in level in the reservoir 15 and of the rise in level in the tank 1.

By way of indication, the reservoir may be discharged within a time interval of 10 seconds, compared with a time of the order of 90 seconds for filling with mains water.

Clearly, however, the level 14 is reached in the tank 1 and the supply of mains water is interrupted even before the reservoir 15 is completely empty, by way of example, 6-7 seconds after the siphon is primed.

Altogether, the amount of water supplied is therefore of the order of 2 litres, of which one litre is necessary for priming and one litre is due to the delay in the operation of the pressure switch.

The total quantity of water supplied (2 litres) is therefore significantly less than the volume of rinsing water (15 litres) normally used.

Upon completion of the first rinsing operation, at least a second rinsing operation starts (generally, however, several rinses are provided for).

In this case, the tank is filled in conventional manner, that is, by the discharge of the liquid into the tank 1 directly from the basin unit 12 through the siphon 13, the amount of liquid supplied being determined by the pressure-switch level 14 and therefore being, for example, 15 litres.

Instead of being discharged by the pump 5, the water from the last rinse, which is practically clean, is recovered in the reservoir 15 for subsequent use as water for a first rinse.

For this purpose, the programming devices, which are conventional, activate the pump 16 instead of the pump 5, without the need for substantial modifications of the programming system.

The mode of operation in which liquid is recovered can be turned off with the use of a button to allow the user to carry out conventional washing cycles if this is preferred. If the reservoir 15 has previously been filled, conventional washing cycles are carried out in the washing cycle following that in which the conventional washing mode of operation was set. It is, in fact, necessary to empty the reservoir.

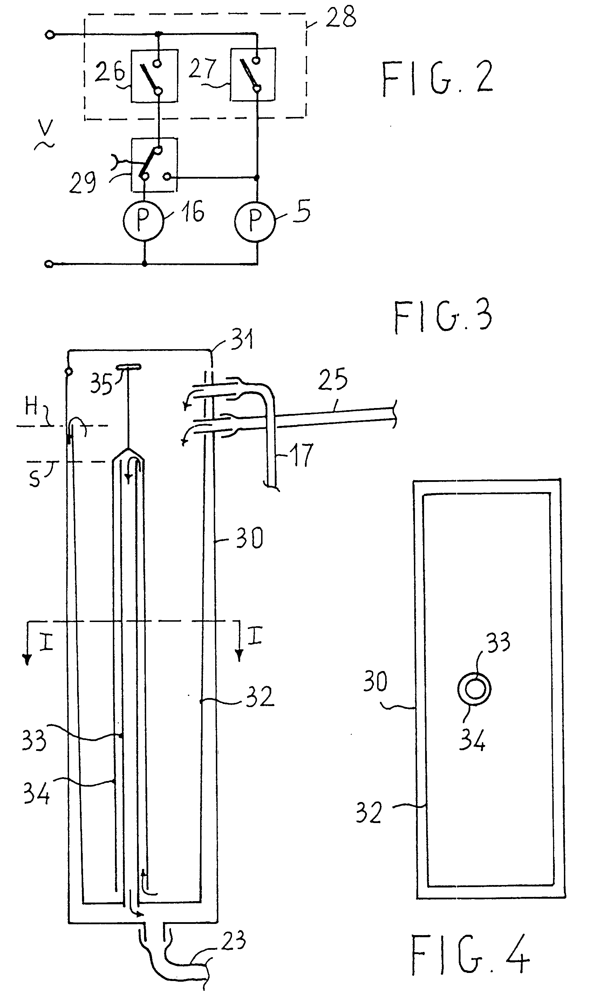

This function can also be achieved very simply without substantial structural complications as shown in Figure 2, which shows the electric circuit which performs this function.

In Figure 2, the supply voltage is applied to the pumps 5 and 16 by means of two switches 26, 27 of a conventional programmer 28.

A bistable diverter button 29 operated manually and disposed on the control panel of the washing machine diverts the supply voltage applied to the pump 16 through the switch 26 of the programmer to the pump 5 and causes the last rinsing water to be discharged instead of being recovered in the reservoir 15.

It is also possible to provide for the recovery mode of operation to be turned off by a button control which prevents the mains-water supply valve from opening in the first rinsing stage and, in the last: rinsing stage, switches the supply of the recovery pump 16 to the discharge pump 5, as already described.

The supply of supplementary water to the reservoir and hence the priming of the siphon do not thus take place.

The water contained is therefore kept in the reservoir without further supplies during subsequent last rinsing stages. This enables conventional rinsing cycles to be carried out starting from the first washing cycle in which the conventional washing mode of operation is set, but this is achieved by the complete exclusion of the first rinse.

However, there is nothing to prevent the provision of a programming device in which the first rinsing stage is replaced by two sub-stages; in the first the nozzle 10 is oriented over the detergent-holder cassette 11 so as to supplement the liquid in the reservoir with water from the mains; in the second sub-stage, the nozzle 10 is oriented so as to direct mains water to the basin unit 12 and from there through the siphon 13 into the tank 1 without affecting the recovery tank.

In this case, the prevention of the opening of the mains-water supply valve is limited to the first sub-stage.

Clearly therefore, in the second sub-stage, the tank 1 can be filled with mains water in order to carry out the first rinse up to the level set by the pressure-switch level control, in wholly conventional manner.

In the case of the first rinse carried out with recovered water, on the other hand, the pressure-switch level control prevents any further supply of water during the second sub-stage.

The foregoing description relates solely to a preferred embodiment of the invention and, clearly, many variations may be applied.

For example, if it is desired to limit the volume of water used in the first rinse, a floating valve may be provided in the reservoir 15 for closing the delivery pipe 17 to the reservoir in order to limit the volume of liquid recovered to an amount less than that which is used for the last rinse and which can be recovered by the pump 16.

The supplementary liquid admitted to the reservoir in order to prime the siphon can thus lead to the discharge into the tank 1 of a volume substantially equal to that required to cause the pressure switch to operate.

This enables the recovered water to be used at any stage of the washing cycle, with an optimal ratio between recovered water and supplementary water, for integral collection from the detergent-holder cassette of the additive required in the stage in which the recovered water is used.

If the washing water is to be heated in the stage in which the recovered water is used, there is also a substantial advantage in terms of energy since the recovered water is at ambient temperature and is thus at least ten degrees "warmer" than the mains water.

In Figure 1, the pipe 17 for delivering recovered water from the pump 16 to the reservoir 15 is connected directly to the reservoir; the delivery pipe 17 may, however, be connected to a suitable compartment of the detergent-holder cassette 11 and the recovered liquid may be directed from there into the reservoir so that a suitable quantity of a sanitizing substance, preferably constituted by a minimal quantity (3 grammes) of detergent is added to the recovered water.

Moreover, a diverter solenoid valve may be provided in the delivery pipe 17 for directing the liquid delivered by the pump 16 alternatively to the recovery reservoir or into a recirculation pipe.

The same pump 16 can thus be used at any stage of the washing cycle to recirculate the water in the washing tank in a recirculation system for wetting the washing in the washing drum, whilst, in the final stage of the last rinse, the rinsing water can be recovered.

Alternatively, in order to associate a washing-water recirculation function with the rinsing-water recovery function, it is also possible to use a third pump operated independently of the other two, instead of the flow diverter valve.

Figures 3 and 4 show a preferred embodiment of the recovery tank 15 which ensures maximum operative safety.

The tank is constituted by an outer container or reservoir 30 having an openable lid 31 and housing a removable, open-topped second reservoir 32, which can be slipped out from above.

An inverted siphon formed in the reservoir 32 is constituted by a vertical discharge pipe 33 opening outside the bottom of the reservoir 32, and by a cylindrical cap 34 closed at the top, outside the pipe 33 and coaxial therewith.

The cap 34 is engaged removably on the pipe 33 and has a removal handle 35 at the top.

The apex S of the siphon is defined by the length of the discharge pipe 33 inside the reservoir 32 which extends up to a level H a certain distance above the apex S.

Fillers 36, 37 connected respectively to the recovery-liquid delivery pipe 17 and to the supplementary-liquid delivery pipe 25 pour the liquid directly into the reservoir 32 and cause priming of the siphon which discharges the liquid into the reservoir 30, the bottom of which is connected to the pipe 23 for discharging the recovered liquid into the washing tank.

In the event of a blockage of the siphon or of other operating anomalies with multiple filling of the reservoir, the excess liquid in the reservoir 32 overflows into the reservoir 30 and flows back into the washing tank where it causes the intervention of the safety devices which are normally provided (the pressure switch and the discharge pump).

The risk of a blockage of the siphon can in any case be eliminated by occasional very simple maintenance operations consisting of the opening of the lid 31 and the removal, inspection, and possibly cleaning of the siphon cap 34, consequently enabling the discharge pipe 33 to be inspected and cleaned.

Unusually, the entire reservoir 32 can be taken out of the container 30.

## Claims

1. A washing machine in which a recovery reservoir (15) associated with recovery. means (16) enables at least a fraction of the liquid used in a stage of the washing cycle to be recovered, the reservoir being arranged in the machine at a level above the level (14) to which a washing tank (1) of the machine is filled, **characterized in that** it comprises:
- an inverted siphon (18) connected to the reservoir (15) and to the tank (1) in order, when primed, to discharge the liquid contained in the recovery reservoir (15) into the washing tank (1) the siphon (18) having an apex (19) at a level higher than the level (20) to which the recovery reservoir (15) is filled with recovered liquid, and
- supplementing means (10, 11, 25) controlled by a washing cycle programmer, in order, at a predetermined stage of the cycle, to supplement the volume of recovered liquid with liquid supplied from the water mains so that the discharge of the volume of liquid contained in the recovery reservoir into the washing tank is brought about by the priming of the inverted siphon (18), the supplementing means comprising a nozzle (10) which can be oriented over a predetermined compartment of a detergent-holder cassette (11) and a pipe (25) for supplying supplementary liquid from the compartment to the recovery reservoir (15), the compartment being at a level higher than the apex (19) of the siphon.

2. A washing machine according to Claim 1, in which the recovery reservoir (15) is connected to the washing tank (1) by means of a delivery pump (16) and a delivery pipe (17) without the interposition of valve means.

3. A washing machine according to any one of Claims 1 or 2, in which the recovery reservoir (15) has means for limiting the volume of liquid recovered.

4. A washing machine according to any one of Claims 1, 2, 3, comprising bistable means (29) for switching a voltage for operating the recovery means (16) to means (5) for discharging the washing tank (1) and thereby preventing the recovery of liquid in the recovery reservoir (15).

5. A washing machine according to any one of Claims 1, 2, 3, 4, in which the washing cycle programmer activates the recovery means (16) during a last rinsing stage and the supplementing means (10, 11, 25) during a first rinsing stage.

6. A washing machine according to the preceding claims, in which the delivery pipe (16) to the recovery reservoir (15) is connected to means (11) for adding a sanitizing substance to the recovery liquid.

7. A washing machine according to the preceding claims, in which the inverted siphon is formed by a discharge pipe (33) extending vertically in the recovery reservoir (15) and by a cylindrical cap (34) closed at the top and engaged removably on the discharge pipe.

8. A washing machine according to the preceding claims, in which the recovery reservoir (15, 32) is housed removably in an outer container (30) from which it can be slipped out from above, the outer container (30) collecting the liquid discharged by the siphon (18, 33, 34) when it is primed and any overflow of liquid from the reservoir (32) and directing the liquid to the washing tank (1).

## Patentansprüche

1. Waschmaschine, bei der ein Rückgewinnungsreservoir (15), das mit Rückgewinnungsmitteln (16) verknüpft ist, eine Rückgewinnung von wenigstens einem Teil der in einer Stufe des Waschzyklus verwendeten Flüssigkeit ermöglicht, wobei das Reservoir in der Maschine auf einem Niveau über dem Niveau (14) angeordnet ist, bis zu dem ein Waschtank (1) der Maschine gefüllt wird, **dadurch gekennzeichnet, dass** sie beinhaltet:
- einen invertierten Siphon (18), der mit dem Reservoir (15) und dem Tank (1) verbunden ist, um nach Ansaugen die in dem Rückgewinnungsreservoir (15) enthaltene Flüssigkeit in den Waschtank (1) zu entleeren, wobei der Siphon (18) einen Scheitelpunkt (19) auf einem Niveau aufweist, das höher als das Niveau (20) liegt, bis zu dem das Rückgewinnungsreservoir (15) mit rückgewonnener Flüssigkeit gefüllt wird, und
- Nachfüllmittel (10, 11, 25), die von einer Waschzyklusprogrammiereinheit gesteuert werden, um in einem vorgegebenen Stadium des Zyklus das Volumen an rückgewonnener Flüssigkeit mit Flüssigkeit aufzufüllen, die von dem Wasserversorgungsnetz zugeführt wird, so dass die Entleerung des Volumens an Flüssigkeit, die in dem Rückgewinnungsreservoir enthalten ist, in den Waschtank durch das Ansaugen des invertierten Siphons (18) bewirkt wird, wobei die Nachfüllmittel eine Düse (10), die über einem vorgegebenen Fach einer Waschmittel-Halterkassette (11) orientiert werden kann, sowie ein Rohr (25) zum Zuführen von Nachfüllflüssigkeit aus dem Fach in das Rückgewinnungsreservoir (15) beinhalten, wobei sich das Fach auf einem Niveau befindet, das höher als der Scheitelpunkt (19) des Siphons liegt.

2. Waschmaschine nach Anspruch 1, bei welcher das Rückgewinnungsreservoir (15) mit dem Waschtank (1) mittels einer Zufuhrpumpe (16) und einem Zufuhrrohr (17) ohne die Zwischenfügung von Ventilmitteln verbunden ist.

3. Waschmaschine nach einem der Ansprüche 1 oder 2, bei welcher das Rückgewinnungsreservoir (15) Mittel zum Begrenzen des Volumens der rückgewonnen Flüssigkeit aufweist.

4. Waschmaschine nach einem der Ansprüche 1, 2, 3, die bistabile Mittel (29) zum Umschalten einer Spannung zum Betreiben der Rückgewinnungsmittel (16) auf Mittel (5) zum Entleeren des Waschtanks (1) und dadurch zum Verhindern der Rückgewinnung von Flüssigkeit in dem Rückgewinnungsreservoir (15) beinhaltet.

5. Waschmaschine nach einem der Ansprüche 1, 2, 3, 4, bei welcher die Waschzyklusprogrammiereinheit die Rückgewinnungsmittel (16) während einer letzten Spülstufe und die Nachfüllmittel (10, 11, 25) während einer ersten Spülstufe aktiviert.

6. Waschmaschine nach den vorhergehenden Ansprüchen, bei welcher das Zufuhrrohr (16) zu dem Rückgewinnungsreservoir (15) mit Mitteln (11) zum Zugeben einer keimfrei machenden Substanz zu der Rückgewinnungsflüssigkeit verbunden ist.

7. Waschmaschine nach den vorhergehenden Ansprüchen, bei welcher der invertierte Siphon durch ein Entleerungsrohr (33), das sich vertikal in dem Rückgewinnungsreservoir (15) erstreckt, und durch eine zylindrische Abdeckung (34) gebildet ist, die an der Oberseite abgeschlossen ist und abnehmbar auf dem Entleerungsrohr in Eingriff ist.

8. Waschmaschine nach den vorhergehenden Ansprüchen, bei welcher das Rückgewinnungsreservoir (15, 32) abnehmbar in einem äußeren Behälter (30) untergebracht ist, aus dem er von oben herausgeschoben werden kann, wobei der äußere Behälter (30) die von dem Siphon (18, 33, 34) nach Ansaugen desselben entleerte Flüssigkeit sowie jegliche überfließende Flüssigkeit aus dem Reservoir (32) sammelt und die Flüssigkeit zu dem Waschtank (1) leitet.

## Revendications

1. Machine à laver, dans laquelle un réservoir de récupération (15) associé à des moyens de récupération (16) permet à au moins une fraction du liquide employé au cours d'une phase du cycle de lavage d'être récupérée, le réservoir étant disposé dans la machine à un niveau au-dessus du niveau (14) auquel un réservoir de lavage (1) de la machine est rempli, **caractérisée en ce qu'**elle comprend :
- un siphon renversé (18) raccordé au réservoir (15) et au réservoir (1) de façon, lorsqu'il est amorcé, à évacuer le liquide contenu dans le réservoir de récupération (15) dans le réservoir de lavage (1), le siphon (18) ayant un sommet (19) à un niveau plus élevé que le niveau (20) auquel le réservoir de récupération (15) est rempli avec du liquide récupéré, et
- des moyens pour supplémenter (10, 11, 25) commandés par un programmateur de cycle de lavage, de manière, à un stade prédéterminé du cycle, de supplémenter le volume de liquide récupéré avec du liquide amené à partir du réseau d'eau de telle sorte que l'évacuation du volume de liquide contenu dans le réservoir de récupération dans le réservoir de lavage est provoquée par l'amorçage du siphon renversé (18) les moyens pour supplémenter comprenant une buse (10) pouvant être orientée par dessus un compartiment prédéterminé d'une cassette porte-détergent (11) et un conduit (25) destiné à amener du liquide supplémentaire du compartiment au réservoir de récupération (15), le compartiment se trouvant à un niveau plus élevé que le sommet (19) du siphon.

2. Machine à laver selon la revendication 1, dans laquelle le réservoir de récupération (15) est raccordé au réservoir de lavage (1) par l'intermédiaire d'une pompe d'amenée (16) et d'un conduit d'amenée (17) sans interposition de moyens à vanne.

3. Machine à laver selon l'une quelconque des revendications 1 ou 2, dans laquelle le réservoir de récupération (15) comporte des moyens destinés à limiter le volume de liquide récupéré.

4. Machine à laver selon l'une quelconque des revendications 1, 2, 3, comprenant des moyens bistables (29) destinés à faire basculer une tension pour activer les moyens de récupération (16) sur des moyens (5) destinés à évacuer le réservoir de lavage (1) et à, ainsi, empêcher la récupération de liquide dans le réservoir de récupération (15).

5. Machine à laver selon l'une quelconque des revendications 1, 2, 3, 4, dans laquelle le programmateur de cycles de lavage active les moyens de récupération (16) au cours d'une dernière phase de rinçage et les moyens pour supplémenter (10, 11, 25) au cours d'une première phase de rinçage.

6. Machine à laver selon les revendications précédentes, dans laquelle le conduit d'amenée (16) menant au réservoir de récupération (15) est raccordé à des moyens (11) destinés à ajouter une substance hygiénique au liquide de récupération.

7. Machine à laver selon les revendications précédentes, dans laquelle le siphon renversé est formé d'un conduit d'évacuation (33) s'étendant verticalement dans le réservoir de récupération (15) et d'un capuchon cylindrique (34) fermé à la partie supérieure et engagé de façon amovible sur le conduit d'évacuation.

8. Machine à laver selon les revendications précédentes, dans laquelle le réservoir de récupération (15, 32) est logé de façon amovible dans un conteneur externe (30) à partir duquel il peut être extrait du dessus par glissement, le conteneur externe (30) collectant le liquide évacué par le siphon (18, 33, 34) lorsqu'il est amorcé ainsi que tout trop-plein de liquide provenant du réservoir (32) et à diriger le liquide vers le réservoir de lavage (1).
